# EUROPEAN PATENT SPECIFICATION

(11) **EP 4 036 374 B1**
(45) Date of publication and mention of the grant of the patent: **10.07.2024**
(21) Application number: 22152873.0
(22) Date of filing: 24.01.2022
(51) Int. Cl.: F01D 5/30, F01D 5/32

(54) **ROTARY MACHINE WITH A ROTOR DISK AND BLADES**
DREHMASCHINE MIT EINER ROTORSCHEIBE UND SCHAUFELN
MACHINE TOURNANTE AVEC UN DISQUE ROTOR ET DES AUBES

(30) Priority: 02.02.2021 KR 20210015040
(43) Date of publication of application: 03.08.2022
(73) Proprietor: Doosan Enerbility Co., Ltd., Seongsan-gu Changwon-si, Gyeongsangnam-do 51711 (KR)
(72) Inventor: GOROSHCHAK, Iurii, 50981 Gimhae-si (KR); HA, Jin Bong, 51018 Gimhae-si (KR)
(74) Representative: Ter Meer Steinmeister & Partner

(56) References cited:
- EP-A1- 0 110 744
- EP-A2- 1 382 800
- GB-A- 2 038 959
- KR-A- 20200 013 475

## Description

### BACKGROUND

### 1. Field

The present invention concerns a rotary machine like a gas turbine and the retainer for the rotor blades inserted in axial grooves of the rotor disk.

### 2. Description of the Related Art

A gas turbine is a combustion engine in which a mixture of air compressed by a compressor and fuel is combusted to produce a high temperature gas that drives a turbine. The gas turbine is used to drive electric generators, aircrafts, ships, trains, or the like.

The gas turbine includes a compressor, a combustor, and a turbine. The compressor serves to intake external air, compress the air, and transfer the compressed air to the combustor. The compressed air compressed by the compressor has a high temperature and a high pressure. The combustor serves to mix compressed air supplied from the compressor and fuel and combust a mixture of compressed air and fuel to produce combustion gas which is discharged to the turbine. Turbine blades in the turbine are rotated by the combustion gas to generate power. The generated power is used in various fields such as generation of electricity and driving of mechanical device.

A rotary machine, such as a compressor, or the like, which performs a rotational motion, includes a rotor disk and blades coupled to the rotor disk. The blades need to be stably fixed to the rotor disk, but there is a problem with the blades moving in an axial direction during rotation.

KR 2020 0013475 A provides a turbine rotor and a steam turbine including the same. The turbine rotor rotating by supplied steam comprises: a disc formed in the flow direction of steam and having a plurality of slots formed on an outer circumferential surface to be spaced apart from each other in a circumferential direction; a blade including a root member inserted into the slot and having an insertion groove formed at an inner end based on the radial direction of the disc, and an air foil installed in the outer end of the root member based on the radial direction of the disc through which the steam passes; and a pressing portion including a support member installed at the inner end of the root member, an insertion protrusion formed on the outer surface of the support member and inserted into the insertion groove, and a wedge installed in the support member and pressing the root member outward in the radial direction.

EP 1 382 800 A2 relates to a fan blade assembly for a turbofan gas turbine engine, and relates in particular to the manner in which the fan blades are mounted in the fan rotor to prevent movement of the fan blades during windmilling of the fan blade assembly.

EP 0 110 744 A1 relates to axial and radial retaining device for fan blades, the blade comprising a dovetail root capable of being engaged by axial sliding in corresponding cells of the rim of the disc.

GB 2 038 959 A relates to an assembly for retaining blades in a turbomachinery rotor.

### SUMMARY

One or more objects of the present technique are achieved by the invention set out by the features of the appended independent claim 1.

Aspects of one or more exemplary embodiments are defined in the appended dependent claims 2-12.

Additional aspects will be set forth in part in the description which follows and, in part, will become apparent from the description, or may be learned by practice of the exemplary embodiments.

### BRIEF DESCRIPTION OF THE DRAWINGS

The above and other aspects will become more apparent from the following description of the exemplary embodiments with reference to the accompanying drawings, in which:
FIG. 1 is a view illustrating an interior of a gas turbine according to a first exemplary embodiment;
FIG. 2 is a longitudinal-sectional view illustrating a part of the gas turbine of FIG. 1;
FIG. 3 is a perspective view illustrating a blade and a rotor disk according to the first exemplary embodiment;
FIG. 4 is a partial perspective view illustrating a root part according to the first exemplary embodiment;
FIG. 5 is a partial perspective view illustrating a rotor disk according to the first exemplary embodiment;
FIG. 6 is a sectional view illustrating a retainer coupled to the rotor disk and the blade according to the first exemplary embodiment;
FIG. 7 is a perspective view illustrating an inner fixing member according to the first exemplary embodiment;
FIG. 8 is a perspective view illustrating an outer fixing member according to the first exemplary embodiment;
FIG. 9 is a perspective view illustrating a spacer according to the first exemplary embodiment;
FIG. 10A is a view illustrating a process of inserting the inner fixing member according to an exemplary embodiment;
FIG. 10B is a view illustrating a process of coupling the blade to the rotor disk according to an exemplary embodiment;
FIG. 10C is a view illustrating a process of mounting the outer fixing member according to an exemplary embodiment;
FIG. 10D is a view illustrating a process of mounting the spacer according to an exemplary embodiment;
FIG. 10E is a view illustrating a process of fixing the spacer by bending a support plate according to an exemplary embodiment;
FIG. 11 is a flowchart illustrating a method of assembling a rotary machine according to an exemplary embodiment;
FIG. 12 is a sectional view illustrating a retainer coupled to a rotor disk and a blade according to a second exemplary embodiment;
FIG. 13 is a perspective view illustrating an outer fixing member according to the second exemplary embodiment;
FIG. 14 is a perspective view illustrating a spacer according to the second exemplary embodiment; and
FIG. 15 is a sectional view illustrating a retainer coupled to a rotor disk and a blade according to a third exemplary embodiment.

### DETAILED DESCRIPTION

Various embodiments will be described below in detail with reference to the accompanying drawings so that those skilled in the art can easily carry out the invention.

It will be understood that the term "comprising" or "including" specifies the presence of stated features, numbers, steps, operations, elements, parts, or combinations thereof, but does not preclude the presence or addition of one or more other features, numbers, steps, operations, elements, parts, or combinations thereof.

Hereinafter, exemplary embodiments will be described in detail with reference to the accompanying drawings. It is noted that like reference numerals refer to like elements throughout the different drawings and exemplary embodiments.

For the same reason, some of the elements in the drawings are exaggerated, omitted, or schematically illustrated.

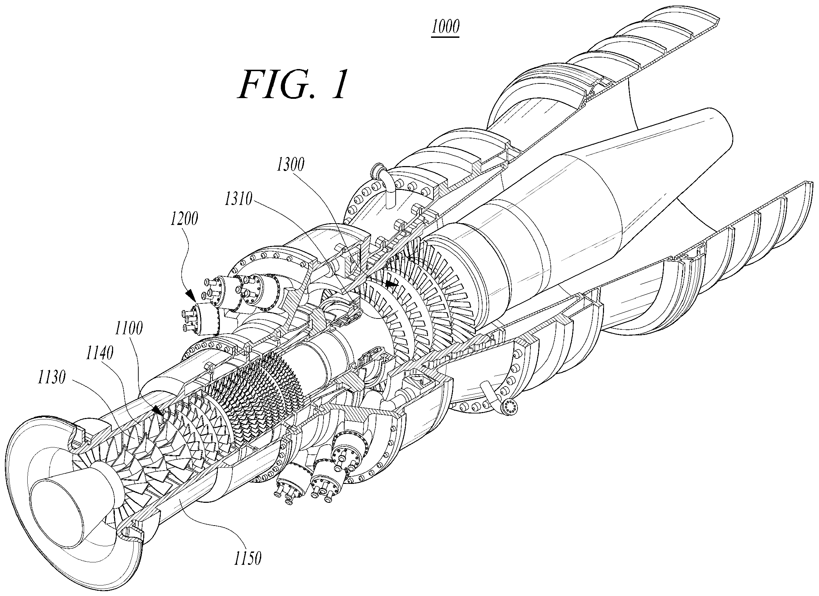

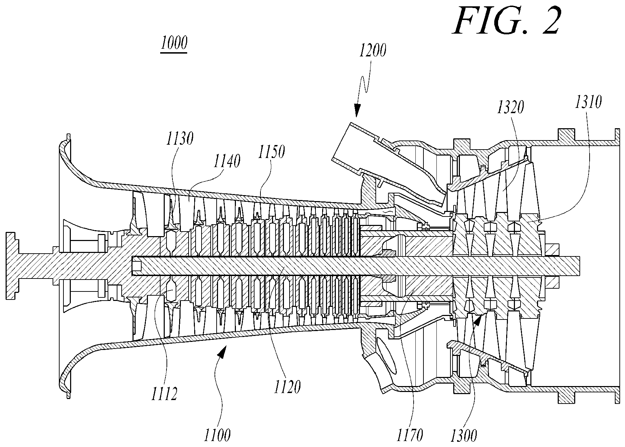

FIG. 1 is a view illustrating an interior of a gas turbine according to an exemplary embodiment, and FIG. 2 is a longitudinal-sectional view of the gas turbine of FIG. 1.

An ideal thermodynamic cycle of a gas turbine may comply with the Brayton cycle. The Brayton cycle consists of four thermodynamic processes: an isentropic compression (i.e., an adiabatic compression), an isobaric combustion, an isentropic expansion (i.e., an adiabatic expansion) and isobaric heat ejection. That is, in the Brayton cycle, thermal energy may be released by combustion of fuel in an isobaric environment after atmospheric air is sucked and compressed into high pressure air, hot combustion gas may be expanded to be converted into kinetic energy, and exhaust gas with residual energy may be discharged to the outside. As such, the Brayton cycle consists of four thermodynamic processes including compression, heating, expansion, and heat ejection.

The gas turbine 1000 employing the Brayton cycle includes a compressor 1100, a combustor 1200, and a turbine 1300. Although the following description will be described with reference to FIG. 1, the present disclosure may be widely applied to other turbine engines having similar configurations to the gas turbine 1000 illustrated in FIG. 1.

Referring to FIGS. 1 and 2, the compressor 1100 of the gas turbine 1000 may suck and compress air. The compressor 1100 may supply the compressed air to the combustor 1200 and also supply the cooling air to a high temperature region of the gas turbine 1000 that is required to be cooled. Because the sucked air is compressed in the compressor 1100 through an adiabatic compression process, the pressure and temperature of the air passing through the compressor 1100 increases.

The compressor 1100 may be designed in a form of a centrifugal compressor or an axial compressor, wherein the centrifugal compressor is applied to a small-scale gas turbine, whereas a multi-stage axial compressor 1100 is applied to a large-scale gas turbine 1000 illustrated in FIG. 1 to compress a large amount of air. In the multi-stage axial compressor 1100, the compressor blades 1130 rotate along with the rotation of a central tie rod 1120 and rotor disks to compress the introduced air while moving the compressed air to rear-stage compressor vanes 1140. As the air passes through the compressor blades 1130 formed in multiple stages, the air is compressed increasingly to a higher pressure.

A plurality of compressor vanes 1140 are mounted in a housing 1150 in multiple stages. The compressor vanes 1140 guide the compressed air moved from front-stage compressor blades 1130 to rear-stage compressor blades 1130. At least some of the compressor vanes 1140 may be mounted so as to be rotatable within a predetermined range for adjustment of an air inflow or the like.

The compressor 1100 may be driven using a portion of the power output from the turbine 1300. To this end, the rotary shaft of the compressor 1100 and the rotary shaft of the turbine 1300 may be directly connected by a torque tube 1170. In the large-scale gas turbine 1000, almost half of the output produced by the turbine 1300 may be consumed to drive the compressor 1100.

The combustor 1200 may mix compressed air supplied from the compressor 1100 with fuel and combust the air-fuel mixture at a constant pressure to produce a high-energy combustion gas. That is, the combustor 1200 mixes the inflowing compressed air with fuel and combusts the mixture to produce a high-temperature and high-pressure combustion gas with high energy. The combustor 1200 increases the temperature of the combustion gas to a temperature at which components of the combustor and components of the turbine can withstand without being thermally damaged through the isobaric combustion process.

The combustor 1200 may include a plurality of burners arranged in a housing in a form of a cell and having a fuel injection nozzle, a combustor liner defining a combustion chamber, and a transition piece that is a connection between the combustor and the turbine.

The high-temperature and high-pressure combustion gas discharged from the combustor 1200 is supplied to the turbine 1300. The high-temperature and high-pressure combustion gas supplied to the turbine 1300 applies impulse or impact force to the turbine blades 1320 of the turbine 1300 while expanding, thereby generating a rotational torque. The obtained rotational torque is transferred to the compressor 1100 through the torque tube 1170, and power exceeding the power required to drive the compressor 1100 is used to drive a generator or the like.

The turbine 1300 includes a plurality of rotor disks 1310, a plurality of turbine blades 1320 radially disposed on each of the rotor disks 1310, and a retainer 1400 for fixing each of the turbine blades 1320. The turbine blade 1320 may be coupled to the rotor disk 1310 in a dovetail manner or the like. In addition, the rotor disk 1310 is provided with turbine vanes fixed to a housing to guide a flow direction of combustion gas passing through the turbine blades 1320.

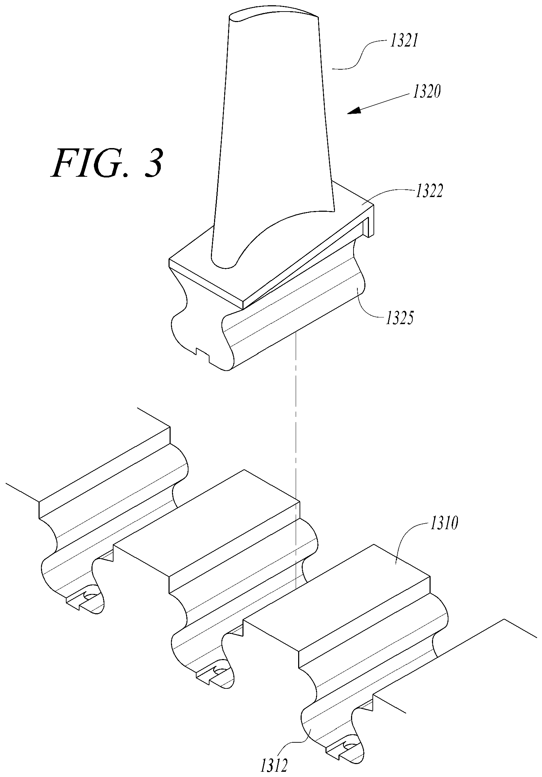

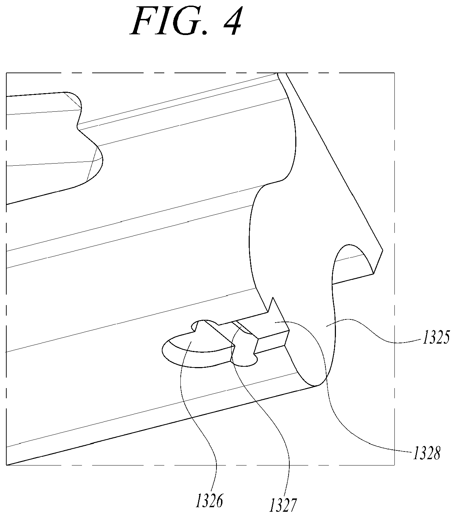

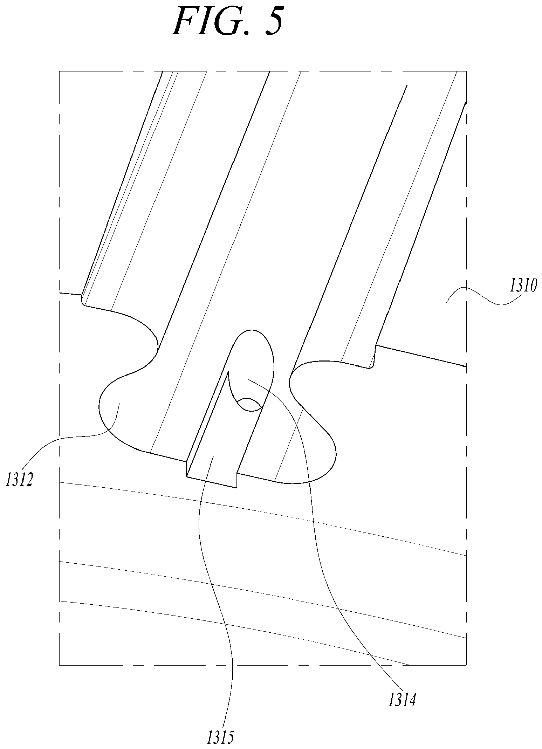

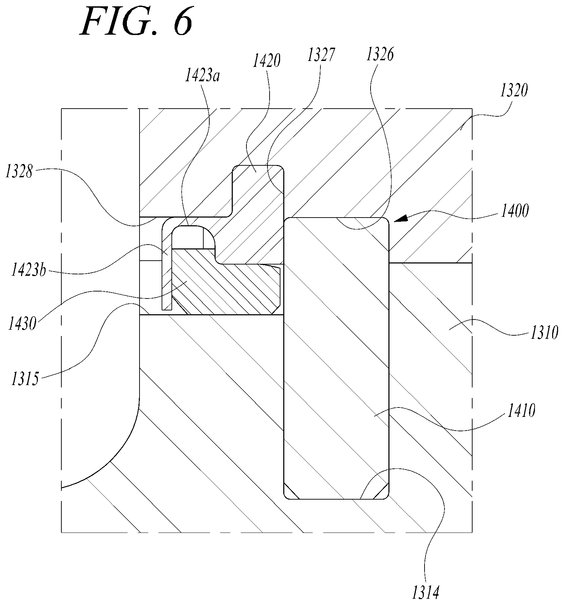

FIG. 3 is a perspective view illustrating a blade and a rotor disk according to the first exemplary embodiment, FIG. 4 is a partial perspective view illustrating a root part according to the first exemplary embodiment, FIG. 5 is a partial perspective view illustrating a rotor disk according to the first exemplary embodiment, and FIG. 6 is a sectional view illustrating a retainer coupled to the rotor disk and the blade according to the first exemplary embodiment.

The rotary machine is a rotary device including a rotor disk and blades, and includes the compressor 1100 and the turbine 1300. Although the turbine 1300 is described as an example of the rotary machine, the disclosure is not limited thereto, and the rotary machine may include the compressor 1100.

Referring to Figs. 3 to 6, each rotor disk 1310 has a substantially disk shape, and includes a plurality of slots 1312 formed in an outer circumferential portion thereof. Each of the slots 1312 a fir-tree-shaped curved surface, and each of the turbine blades 1320 is inserted into the associated slot 1312.

The turbine blade 1320 includes a plate-shaped airfoil part 1321, a platform part 1322 coupled to a lower portion of the airfoil part 1321, and a root part 1325 protruding downward from the platform part 1322. The airfoil part 1321 may be formed of an airfoil-shaped curved plate and may have an airfoil shape optimized according to the specifications of a gas turbine 1000. The airfoil part 1321 may have a leading edge disposed on an upstream side and a trailing edge disposed on a downstream side based on a flow direction of combustion gas.

A plurality of film cooling holes are formed on a surface of the airfoil part 1321 so that the film cooling holes communicate with a cooling path formed in the airfoil part 1321 to supply cooling air to the surface of the airfoil part 1321.

The platform part 1322 may have a substantially rectangular plate or rectangular pillar shape disposed between the airfoil part 1321 and the root part 1325. The side of the platform part 1322 contacts the side of a platform part 1322 of an adjacent turbine blade 1320, thereby maintaining a gap between the turbine blades 1320. A cooling path may be formed in the airfoil part 1321, the platform part 1322, and the root part 1325 so that cooling air supplied from the rotor disk 1310 flows in the cooling path.

The root part 1325 has a substantially fir-tree-shaped curved portion corresponding to the curved portion formed in the slot 1312 of the rotor disk 1310. The root part 1325 is according to the present invention inserted into the slot 1312 in an axial direction (i.e., a direction parallel to the central axis of the rotor disk).

The retainer 1400 includes an inner fixing member 1410 inserted into a bottom of the slot 1312, an outer fixing member 1420 inserted into a lower side of the root part 1325 to abut against the inner fixing member 1410, and a spacer 1430 inserted between the outer fixing member 1420 and the bottom of the slot 1312 to prevent the outer fixing member 1420 from being separated.

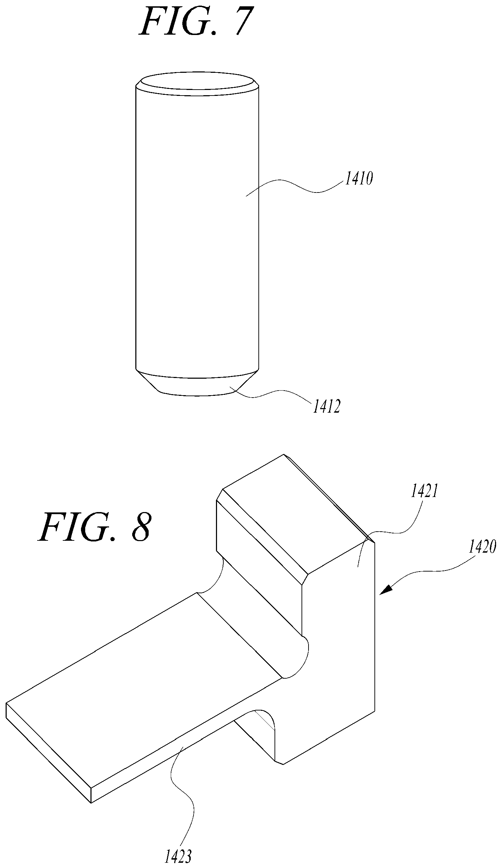

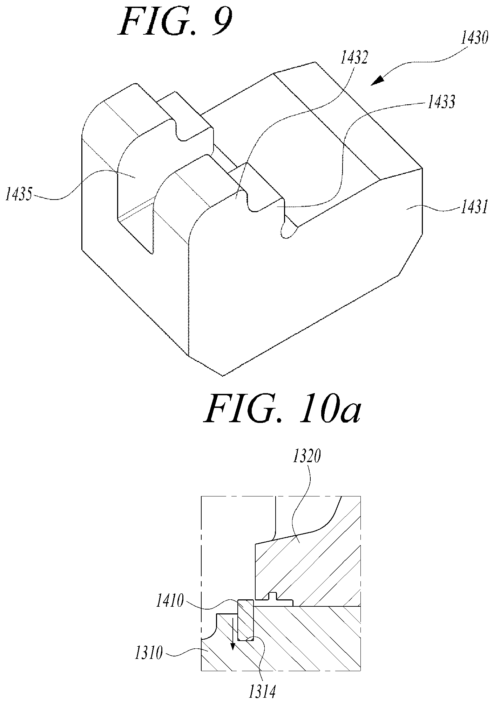

FIG. 7 is a perspective view illustrating an inner fixing member according to the first exemplary embodiment, FIG. 8 is a perspective view illustrating an outer fixing member according to the first exemplary embodiment, and FIG. 9 is a perspective view illustrating a spacer according to the first exemplary embodiment.

Referring to FIGS. 5 to 9, the bottom of the slot 1312 is provided with an inner groove 1314 into which the inner fixing member 1410 is inserted and a mounting groove 1315 connected to an upper side of the inner groove 1314 and extending form the inner groove 1314 to a side surface of the rotor disk 1310. The inner groove 1314 has a circular cross section and is formed deeper than the mounting groove 1315.

On the other hand, a lower surface of the root part 1325 is provided with a first groove 1326 into which the inner fixing member 1410 is inserted, a second groove 1327 into which the outer fixing member 1420 is inserted and formed deeper than the first groove 1326, and a third groove 1328 extending from the second groove 1327 to the side surface of the root part 1325.

The first groove 1326 has a circular cross-section such that the inner fixing member 1410 can be inserted, and the second groove 1327 is formed to have a greater width than the first groove 1326 and the third groove 1328 so that the second groove 1327 protrudes beyond side surfaces of the first groove 1326 and the third groove 1328. The third groove 1328 defines a passage through which parts can be inserted.

The inner fixing member 1410 may be formed in a shape of a column, such as a cylindrical or rectangular column. The inner fixing member 1410 may be inserted into the inner groove 1314 and the first groove 1326, and have a tapered portion 1412 at a longitudinal end that contacts the bottom of the inner groove 1314 in the inner fixing member 1410.

The outer fixing member 1420 is inserted into the second groove 1327 so that the outer fixing member 1420 is supported in contact with the inner fixing member 1410 and the second groove 1327. The outer fixing member 1420 includes a body portion 1421 inserted into the second groove 1327 and a support plate 1423 protruding in the axial direction from the body portion 1421. The support plate 1423 protrudes from a side surface of the body portion 1421 and is bent to contact an end of the spacer 1430 to support the spacer 1430.

The spacer 1430 may include a support block 1431 supporting the outer fixing member 1420 and protrusions 1432 protruding from the support block 1431 toward the turbine blade 1320. The support block 1431 may be inserted into the mounting groove 1315, and the protrusions 1432 may be inserted into the third groove 1328.

The support block 1431 contacts an inner end of the outer fixing member 1420 to prevent the outer fixing member 1420 from being separated from the second groove 1327. The two protrusions 1432 are spaced apart from each other, and a middle groove 1435 extending downward is formed between the protrusions 1432. In addition, the support block 1431 has a protruding support step portion 1433 to allow a tool to be inserted into the middle groove 1435 and hung on the support step portion 1433 while the spacer 1430 is being separated so that the spacer 1430 can be easily separated.

The support plate 1423 is bent in a state in which the spacer 1430 is mounted and comes into contact with an outer end of the spacer 1430, thereby preventing the spacer 1430 from being separated between the turbine blade 1320 and the rotor disk 1310 by the support plate 1423.

The support plate 1423 has a first portion 1423a protruding from the body portion 1421 in a lateral direction to contact the bottom of the third groove 1328, and a second portion 1423b bent from the first portion 1423a to contact the spacer 1430. The first portion 1423a may contact the protrusion 1432, and the second portion 1423b may contact the protrusion 1432 and the support block 1431.

According to the exemplary embodiment, the inner fixing member 1410 and the outer fixing member 1420 are inserted into the groove and contact each other to prevent the turbine blade 1320 from moving in the axial direction of the rotor disk 1310. In addition, the spacer 1430 is mounted on the inner side of the inner fixing member 1410 so that the inner fixing member 1410 can be stably fixed to the turbine blade 1320. Further, the spacer 1430 may be stably fixed without being separated by the support plate 1423.

Hereinafter, a method of assembling the rotary machine according to an exemplary embodiment will be described.

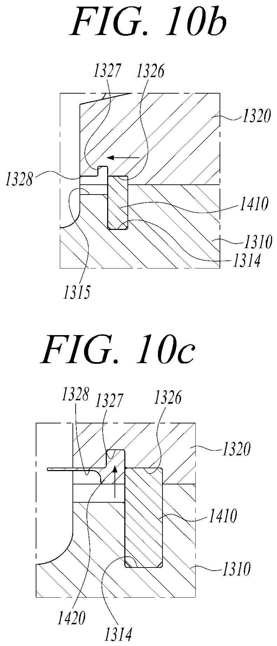

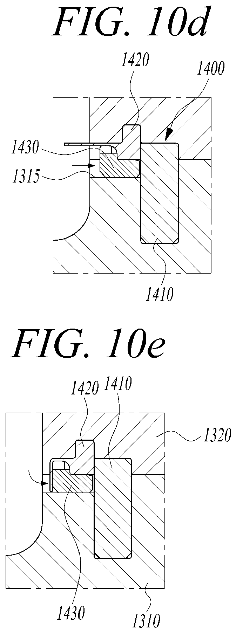

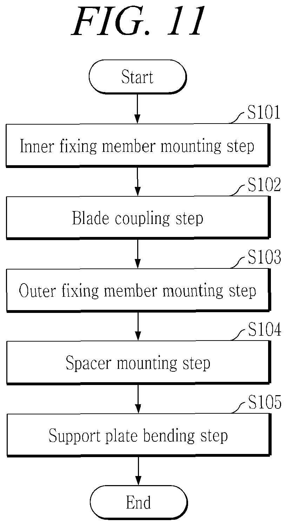

FIG. 10A is a view illustrating a process of inserting the inner fixing member according to an exemplary embodiment, FIG. 10B is a view illustrating a process of coupling the blade to the rotor disk according to an exemplary embodiment, FIG. 10C is a view illustrating a process of mounting the outer fixing member according to an exemplary embodiment, FIG. 10D is a view illustrating a process of mounting the spacer according to an exemplary embodiment, FIG. 10E is a view illustrating a process of fixing the spacer by bending a support plate according to an exemplary embodiment, and FIG. 11 is a flowchart illustrating a method of assembling a rotary machine according to an exemplary embodiment.

Referring to FIGS. 10A to 11, the method of assembling rotary machine includes an inner fixing member mounting step (operation S101), a blade coupling step (operation S102), an outer fixing member mounting step (operation S103), a spacer mounting step (operation S104), and a support plate bending step (operation S105).

In the inner fixing member mounting step (operation S101), the inner fixing member 1410 is inserted into the inner groove 1314 formed in the bottom of the slot 1312 of the rotor disk 1310. Here, the inner fixing member 1410 is formed in a column shape so that a portion of the inner fixing member 1410 is inserted into the inner groove 1314 and an outer side of the inner fixing member 1410 is inserted into the first groove 1326. In the blade coupling step (operation S102), the root part 1325 of the turbine blade 1320 is inserted into the slot 1312 formed in the rotor disk 1310.

In the outer fixing member mounting step (operation S103), the outer fixing member 1320 is inserted into the second groove 1327 formed on the lower surface of the root part 1325 of the turbine blade 1320. Here, the outer fixing member 1420 is moved between the turbine blade 1320 and the rotor disk 1310 through the mounting groove 1315 and the third groove 1328, and then is pushed into the second groove 1327. Here, the side surface of the outer fixing member 1420 abuts against the inner fixing member 1410, and the support plate 1423 remains inserted into the third groove 1328.

In the spacer mounting step (operation S104), the spacer 1430 is inserted into the outer fixing member 1420 through the mounting groove 1315 to prevent the outer fixing member 1420 from being separated from the second groove 1327. Here, the spacer 1430 is disposed between the outer fixing member 1420 and the rotor disk 1310 to prevent the outer fixing member 1420 from being separated into the mounting groove 1315.

In the support plate bending step (operation S105), the support plate 1423 formed on the outer fixing member 1420 is bent so that the support plate 1423 comes into contact with the end of the spacer 1430. Accordingly, the spacer 1430 may be stably positioned without being separated by the support plate 1423.

On the other hand, in order to repair the turbine blade 1320 by separating the turbine blade 1320 from the rotor disk 1310, after straightening the support plate, a tool may be inserted between the protrusions 1432 and hung on the support step portion 1433 to remove the space, and then the outer fixing member 1420 may be removed and the turbine blade 1320 may be removed from the rotor disk 1310.

Hereinafter, a rotary machine according to a second exemplary embodiment will be described.

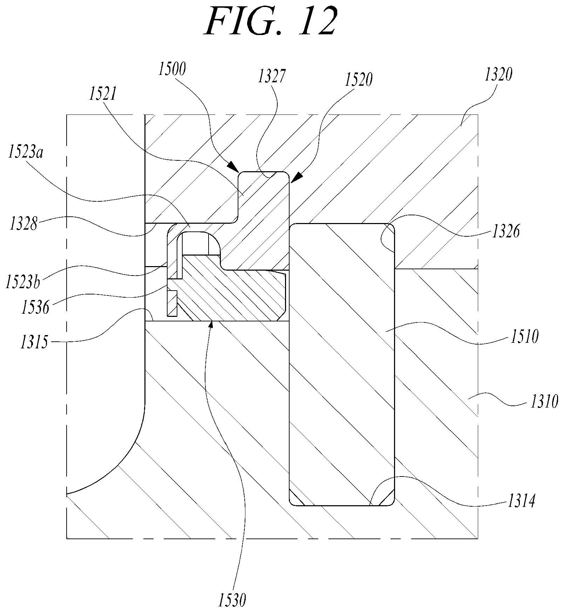

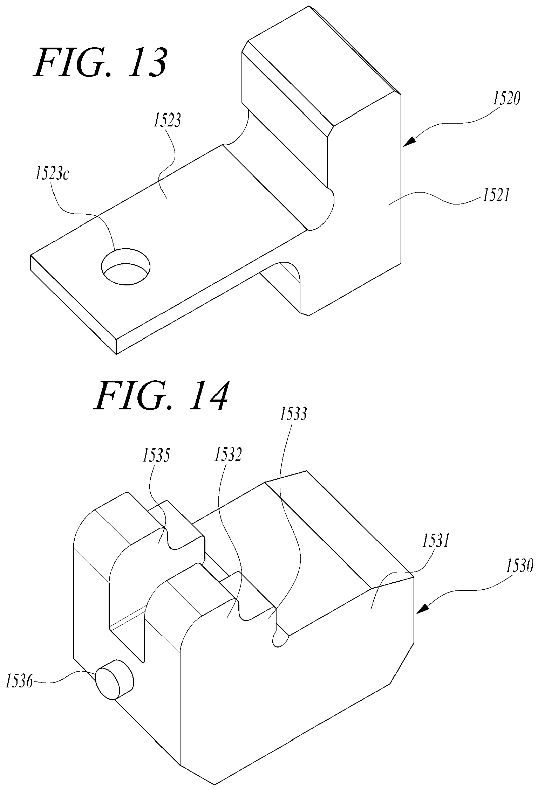

FIG. 12 is a sectional view illustrating a retainer coupled to a rotor disk and a blade according to a second exemplary embodiment, FIG. 13 is a perspective view illustrating an outer fixing member according to the second exemplary embodiment, and FIG. 14 is a perspective view illustrating a spacer according to the second exemplary embodiment.

Referring to FIGS. 12 to 14, the rotary machine according to the second exemplary embodiment has the same structure as the rotary machine according to first exemplary embodiment except for a retainer 1500, so a redundant description thereof will be omitted.

The retainer 1500 includes an inner fixing member 1510 inserted into the bottom of the slot 1312, an outer fixing member 1520 inserted into the lower side of the root part 1325 to abut against the inner fixing member 1510, and a spacer 1530 inserted between the outer fixing member 1520 and the bottom of the slot 1312 to prevent the outer fixing member 1520 from being separated.

The inner fixing member 1510 may have a cylindrical shape and may be inserted into the inner groove 1314 and the first groove 1326. The outer fixing member 1520 is inserted into the second groove 1327 to contact and support the inner fixing member 1510. The outer fixing member 1520 has a body portion 1521 inserted into the second groove 1327 and a support plate 1523 protruding in the axial direction from the body portion 1521. The support plate 1523 protrudes from a side surface of the body portion 1521 and is bent to contact the end of the spacer 1530.

The spacer 1530 may have a support block 1531 supporting the outer fixing member 1520 and protrusions 1532 protruding from the support block 1531 toward the turbine blade 1320. The support block 1531 may be inserted into the mounting groove 1315, and the protrusion 1532 may be inserted into the third groove 1328.

The support block 1531 contacts an inner end of the outer fixing member 1520 to prevent the outer fixing member 1520 from being separated from the second groove 1327. The two protrusions 1532 are spaced apart from each other, and a middle groove 1535 extending downward is formed between the protrusions 1532. In addition, a protruding support step portion 1533 is formed on the support block 1531.

Further, a coupling protrusion 1536 protruding outward is formed on an outer surface of the support block 1531. The coupling protrusion 1536 may have a circular or polygonal cross-section.

The support plate 1523 is bent in a state in which the spacer 1530 is mounted so that the support plate 1523 abuts against the outer end of the spacer 1530, thereby preventing the spacer 1530 from being separated between the turbine blade 1320 and the rotor disk 1310 by the support plate 1523.

The support plate 1523 has a first portion 1523a protruding from a side of the body portion 1521 in a lateral direction to abut against the bottom of the third groove 1328 and a second portion 1523b bent at the first portion 1523a to abut against the spacer 1530. The first portion 1523a may contact the protrusion 1532, and the second portion 1523b may contact the protrusion 1532 and the support block 1531.

The support plate 1523 may include a coupling hole 1523c fitted with the coupling protrusion 1536. For example, the coupling hole 1523c may be formed in the second portion 1523b of the support plate 1523. When the coupling protrusion 1536 and the coupling hole 1523c are engaged, the support plate 1523 may support the spacer 1530 more stably.

Hereinafter, a rotary machine according to a third exemplary embodiment will be described.

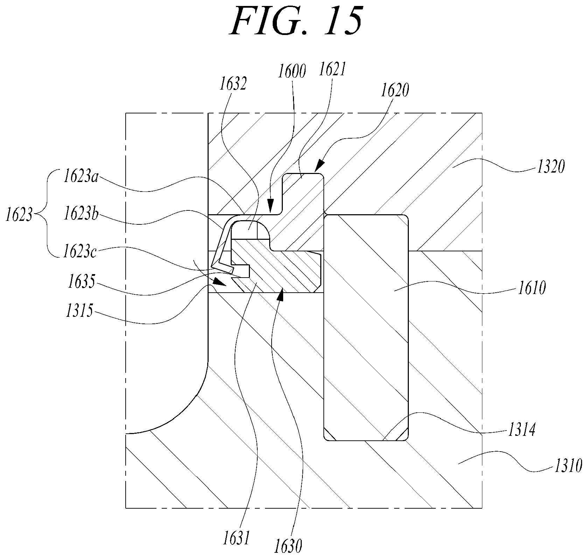

FIG. 15 is a sectional view illustrating a retainer coupled to a rotor disk and a blade according to a third exemplary embodiment.

Referring to FIG. 15, the rotary machine according to the third exemplary embodiment has the same structure as the rotary machine according to the first exemplary embodiment except for a retainer 1600, so a redundant description thereof will be omitted.

The retainer 1600 includes an inner fixing member 1610 inserted into the bottom of the slot 1312, an outer fixing member 1620 inserted into the lower side of the root part 1325 to abut against the inner fixing member 1610, and a spacer 1630 inserted between the outer fixing member 1620 and the bottom of the slot 1312 to prevent the outer fixing member 1620 from being separated.

The inner fixing member 1610 may have a cylindrical shape. The outer fixing member 1620 is inserted into the lower side of the root part 1325 of the turbine blade 1320 and is supported in contact with the inner fixing member 1610. The outer fixing member 1620 has a body portion 1621 inserted into the root part 1325 and a support plate 1623 protruding in the axial direction from the body portion 1621. The support plate 1623 protrudes from the side surface of the body portion 1621 in the lateral direction and is bent to contact the end of the spacer 1630.

The spacer 1630 may have a support block 1631 supporting the outer fixing member 1620 and a protrusion 1632 protruding from the support block 1631 toward the turbine blade 1320. An accommodation groove 1635 into which the support plate 1623 is inserted may be formed at an end side of the support block 1631.

The support plate 1623 is bent in a state in which the spacer 1630 is mounted inside the outer fixing member 1620 so that the spacer 1630 abuts against the outer end of the spacer 1630, thereby preventing the spacer 1630 from being separated between the turbine blade 1320 and the rotor disk 1310.

The support plate 1623 may have a first portion 1623a protruding from the body portion 1621 in the lateral direction, a second portion 1623b bent from the first portion 1623a to abut against the spacer 1630, and a third portion 1623c bent from the second portion 1623b and inserted into the accommodation groove 1635. The first portion 1623a may contact the protrusion 1632, and the second portion 1623b may contact the protrusion 1632 and the support block 1631. The third portion 1623c is inserted into the accommodation groove 1635 formed on the outer surface of the support block 1631 to support the spacer 1630.

While exemplary embodiments have been described with reference to the accompanying drawings, it will be apparent to those skilled in the art that various modifications in form and details can be made therein without departing from the invention as set forth in the appended claims. Therefore, the description of the exemplary embodiments should be construed in a descriptive sense and not to limit the scope of the claims, and many alternatives, modifications, and variations will be apparent to those skilled in the art.

## Claims

1. A rotary machine comprising:
a rotor disk (1310) including a plurality of slots (1312);
a plurality of blades (1320) mounted on an outer circumferential surface of the rotor disk (1310), each of the blades having a root part (1325) inserted into an associated one of the slots (1312) in an axial direction; **characterised by**
a retainer (1400, 1500, 1600) restraining axial movement of the plurality of blades (1320),
wherein the retainer (1400, 1500, 1600) comprises:
- an inner fixing member (1410, 1510, 1610) inserted into a bottom of the slot (1312), wherein the bottom of the slot (1312) is provided with an inner groove (1314) into which the inner fixing member (1410, 1510, 1610) is inserted, and the lower surface of the root part (1325) is provided with a first groove (1326) into which the inner fixing member (1410, 1510, 1610) is inserted,
- an outer fixing member (1420, 1520, 1620) inserted into a lower surface of the root part (1325) to abut against the inner fixing member (1410, 1510, 1610), and
- a spacer (1430, 1530, 1630) inserted between the outer fixing member (1420, 1520, 1620) and the bottom of the slot (1312) to prevent the outer fixing member (1420, 1520, 1620) from being separated,
wherein the outer fixing member (1420, 1520, 1620) includes a body portion (1421, 1521, 1621) inserted into the root part (1325) and a support plate protruding from a side of the body portion (1421, 1521, 1621) in a lateral direction and bent to abut against an end of the spacer (1430, 1530, 1630).

2. The rotary machine according to claim 1, wherein the bottom of the slot (1312) is provided with a mounting groove (1315) connected to an upper portion of the inner groove (1314) and extending from the inner groove (1314) to a side surface of the rotor disk (1310).

3. The rotary machine according to any one of the preceding claims, wherein the lower surface of the root part (1325) is provided with a second groove (1327) into which the outer fixing member (1420, 1520, 1620) is inserted and formed deeper than the first groove (1326).

4. The rotary machine according to claim 3, wherein the lower surface of the root part (1325) is provided with a third groove (1328) extending from the second groove (1327) to the side surface of the root part (1325).

5. The rotary machine according to any one of the preceding claims when depending on claim 2, wherein the inner fixing member (1410, 1510, 1610) has a column shape and is inserted into the inner groove (1314) and the first groove (1326).

6. The rotary machine according to any one of the preceding claims when depending on claim 4, wherein the spacer (1430, 1530, 1630) includes a support block (1431, 1531, 1631) supporting the outer fixing member (1420, 1520, 1620) and protrusions (1432, 1532, 1632) protruding from the support block (1431, 1531, 1631) toward the blade (1320) to be inserted into the third groove (1328).

7. The rotary machine according to claim 6, wherein two protrusions (1432, 1532, 1632) are spaced apart from each other, and a middle groove (1435) is formed between the two protrusions (1432, 1532, 1632).

8. The rotary machine according to claim 6 or 7, wherein a protruding support step portion (1433) is formed on the support block (1431, 1531, 1631).

9. The rotary machine according to any one of the preceding claims when depending on claim 4, wherein the support plate (1423, 1523, 1623) includes a first portion (1423a, 1523a, 1623a) protruding from the body portion (1421) in the lateral direction to abut against the bottom of the third groove (1328) and a second portion (1423b, 1523b, 1623b) bent from the first portion (1423a, 1523a, 1623a) to abut against the spacer (1430, 1530, 1630).

10. The rotary machine according to claim 9, wherein the spacer (1430, 1530, 1630) includes an accommodation groove (1635), and the support plate (1423, 1523, 1623) further includes a third portion (1623c) bent from the second portion (1623b) and inserted into the accommodation groove (1635).

11. The rotary machine according to any one of the preceding claims, wherein the spacer (1430, 1530, 1630) includes a coupling protrusion (1536),

12. The rotary machine according to claim 11, wherein the support plate (1423, 1523, 1623) includes a coupling hole (1523c) into which the coupling protrusion (1536) is fitted.

## Patentansprüche

1. Rotierende Maschine, die Folgendes umfasst:
eine Rotorscheibe (1310), die mehrere Schlitze (1312) enthält; und
mehrere Rotorblätter (1320), die an einer Außenumfangsoberfläche der Rotorscheibe (1310) montiert sind, wobei jedes der Rotorblätter einen Wurzelteil (1325) aufweist, der in einen zugeordneten der Schlitze (1312) in axialer Richtung eingesetzt ist; **gekennzeichnet durch**
einen Halter (1400, 1500, 1600), der eine Axialbewegung der mehreren Rotorblätter (1320) einschränkt,
wobei der Halter (1400, 1500, 1600) Folgendes umfasst:
- ein inneres Befestigungselement (1410, 1510, 1610), das in eine Unterseite des Schlitzes (1312) eingesetzt ist, wobei die Unterseite des Schlitzes (1312) mit einer inneren Nut (1314) versehen ist, in die das innere Befestigungselement (1410, 1510, 1610) eingesetzt ist, und die untere Oberfläche des Wurzelteils (1325) mit einer ersten Nut (1326) versehen ist, in die das innere Befestigungselement (1410, 1510, 1610) eingesetzt ist,
- ein äußeres Befestigungselement (1420, 1520, 1620), das in eine untere Oberfläche des Wurzelteils (1325) derart eingesetzt ist, dass es am inneren Befestigungselement (1410, 1510, 1610) anliegt, und
- einen Abstandshalter (1430, 1530, 1630), der zwischen dem äußeren Befestigungselement (1420, 1520, 1620) und der Unterseite des Schlitzes (1312) eingesetzt ist, um zu verhindern, dass das äußere Befestigungselement (1420, 1520, 1620) abgelöst wird,
wobei das äußere Befestigungselement (1420, 1520, 1620) einen Körperabschnitt (1421, 1521, 1621), der in den Wurzelteil (1325) eingesetzt ist, und eine Trägerplatte, die von einer Seite des Körperabschnitts (1421, 1521, 1621) in einer Querrichtung vorsteht und gebogen ist, um an einem Ende des Abstandshalters (1430, 1530, 1630) anzuliegen, enthält.

2. Rotierende Maschine nach Anspruch 1, wobei die Unterseite des Schlitzes (1312) mit einer Befestigungsnut (1315) versehen ist, die mit einem oberen Abschnitt der inneren Nut (1314) verbunden ist und von der inneren Nut (1314) zu einer Seitenoberfläche der Rotorscheibe (1310) verläuft.

3. Rotierende Maschine nach einem der vorhergehenden Ansprüche, wobei die untere Oberfläche des Wurzelteils (1325) mit einer zweiten Nut (1327) versehen ist, in die das äußere Befestigungselement (1420, 1520, 1620) eingesetzt ist und die tiefer als die erste Nut (1326) gebildet ist.

4. Rotierende Maschine nach Anspruch 3, wobei die untere Oberfläche des Wurzelteils (1325) mit einer dritten Nut (1328) versehen ist, die von der zweiten Nut (1327) zur Seitenoberfläche des Wurzelteils (1325) verläuft.

5. Rotierende Maschine nach einem der vorhergehenden Ansprüche, wenn abhängig von Anspruch 2, wobei das innere Befestigungselement (1410, 1510, 1610) eine Säulenform aufweist und in die innere Nut (1314) und die erste Nut (1326) eingesetzt ist.

6. Rotierende Maschine nach einem der vorhergehenden Ansprüche, wenn abhängig von Anspruch 4, wobei der Abstandshalter (1430, 1530, 1630) einen Trägerblock (1431, 1531, 1631), der das äußere Befestigungselement (1420, 1520, 1620) trägt, und Vorsprünge (1432, 1532, 1632), die vom Trägerblock (1431, 1531, 1631) zum Rotorblatt (1320) vorstehen, um in die dritte Nut (1328) eingesetzt zu werden, enthält.

7. Rotierende Maschine nach Anspruch 6, wobei zwei Vorsprünge (1432, 1532, 1632) voneinander beabstandet sind und eine mittlere Nut (1435) zwischen den zwei Vorsprüngen (1432, 1532, 1632) gebildet ist.

8. Rotierende Maschine nach Anspruch 6 oder 7, wobei ein vorstehender Trägerschrittabschnitt (1433) am Trägerblock (1431, 1531, 1631) gebildet ist.

9. Rotierende Maschine nach einem der vorhergehenden Ansprüche, wenn abhängig von Anspruch 4, wobei die Trägerplatte (1423, 1523, 1623) einen ersten Abschnitt (1423a, 1523a, 1623a), der vom Körperabschnitt (1421) in der Querrichtung derart vorsteht, dass er an der Unterseite der dritten Nut (1328) anliegt, und einen zweiten Abschnitt (1423b, 1523b, 1623b), der vom ersten Abschnitt (1423a, 1523a, 1623a) derart gebogen ist, dass er am Abstandshalter (1430, 1530, 1630) anliegt, enthält.

10. Rotierende Maschine nach Anspruch 9, wobei der Abstandshalter (1430, 1530, 1630) eine Aufnahmenut (1635) enthält und die Trägerplatte (1423, 1523, 1623) ferner einen dritten Abschnitt (1623c) enthält, der vom zweiten Abschnitt (1623b) gebogen ist und in die Aufnahmenut (1635) eingesetzt ist.

11. Rotierende Maschine nach einem der vorhergehenden Ansprüche, wobei der Abstandshalter (1430, 1530, 1630) einen Kopplungsvorsprung (1536) enthält.

12. Rotierende Maschine nach Anspruch 11, wobei die Trägerplatte (1423, 1523, 1623) ein Kopplungsloch (1523c) enthält, in das der Kopplungsvorsprung (1536) eingepasst ist.

## Revendications

1. Machine rotative comportant :
un disque de rotor (1310) incluant une pluralité de fentes (1312) ;
une pluralité d'aubes (1320) montées sur une surface circonférentielle extérieure du disque de rotor (1310), chacune des aubes ayant une partie d'emplanture (1325) insérée dans une fente associée parmi les fentes (1312) dans une direction axiale ; **caractérisée par** un dispositif de retenue (1400, 1500, 1600) restreignant un mouvement axial de la pluralité d'aubes (1320),
dans laquelle le dispositif de retenue (1400, 1500, 1600) comporte :
- un élément de fixation intérieur (1410, 1510, 1610) inséré dans un fond de la fente (1312), dans laquelle le fond de la fente (1312) est pourvu d'une rainure intérieure (1314) dans laquelle l'élément de fixation intérieur (1410, 1510, 1610) est inséré, et la surface inférieure de la partie d'emplanture (1325) est pourvue d'une première rainure (1326) dans laquelle l'élément de fixation intérieur (1410, 1510, 1610) est inséré,
- un élément de fixation extérieur (1420, 1520, 1620) inséré dans une surface inférieure de la partie d'emplanture (1325) pour venir en butée contre l'élément de fixation intérieur (1410, 1510, 1610), et
- une entretoise (1430, 1530, 1630) insérée entre l'élément de fixation extérieur (1420, 1520, 1620) et le fond de la fente (1312) pour empêcher une séparation de l'élément de fixation extérieur (1420, 1520, 1620),
dans laquelle l'élément de fixation extérieur (1420, 1520, 1620) inclut une portion de corps (1421, 1521, 1621) insérée dans la partie d'emplanture (1325) et une plaque de support faisant saillie à partir d'un côté de la portion de corps (1421, 1521, 1621) dans une direction latérale et pliée pour venir en butée contre une extrémité de l'entretoise (1430, 1530, 1630).

2. Machine rotative selon la revendication 1, dans laquelle le fond de la fente (1312) est pourvu d'une rainure de montage (1315) reliée à une portion supérieure de la rainure intérieure (1314) et s'étendant de la rainure intérieure (1314) à une surface latérale du disque de rotor (1310).

3. Machine rotative selon l'une quelconque des revendications précédentes, dans laquelle la surface inférieure de la partie d'emplanture (1325) est pourvue d'une deuxième rainure (1327) dans laquelle l'élément de fixation extérieur (1420, 1520, 1620) est inséré et formée plus profonde que la première rainure (1326).

4. Machine rotative selon la revendication 3, dans laquelle la surface inférieure de la partie d'emplanture (1325) est pourvue d'une troisième rainure (1328) s'étendant de la deuxième rainure (1327) à la surface latérale de la partie d'emplanture (1325).

5. Machine rotative selon l'une quelconque des revendications précédentes lorsque dépendante de la revendication 2, dans laquelle l'élément de fixation intérieur (1410, 1510, 1610) a une forme de colonne et est inséré dans la rainure intérieure (1314) et la première rainure (1316).

6. Machines rotative selon l'une quelconque des revendications précédentes lorsque dépendante de la revendication 4, dans laquelle l'entretoise (1430, 1530, 1630) inclut un bloc de support (1431, 1531, 1631) supportant l'élément de fixation extérieur (1420, 1520, 1620) et des saillies (1432, 1532, 1632) faisant saillie à partir du bloc de support (1431, 1531, 1631) vers l'aube (1320) pour être insérées dans la troisième rainure (1328).

7. Machine rotative selon la revendication 6, dans laquelle deux saillies (1432, 1532, 1632) sont espacées l'une de l'autre, et une rainure centrale (1435) est formée entre les deux saillies (1432, 1532, 1632).

8. Machine rotative selon la revendication 6 ou 7, dans laquelle une portion de gradin de support en saillie (1433) est formée sur le bloc de support (1431, 1531, 1631).

9. Machine rotative selon l'une quelconque des revendications précédentes lorsque dépendante de la revendication 4, dans laquelle la plaque de support (1423, 1523, 1623) inclut une première portion (1423a, 1523a, 1623a) faisant saillie à partir de la portion de corps (1421) dans la direction latérale pour venir en butée contre le fond de la troisième rainure (1328) et une deuxième portion (1423b, 1523b, 1623b) pliée à partir de la première portion (1423a, 1523a, 1623a) pour venir en butée contre l'entretoise (1430, 1530, 1630).

10. Machine rotative selon la revendication 9, dans laquelle l'entretoise (1430, 1530, 1630) inclut une rainure de réception (1635), et la plaque de support (1423, 1523, 1623) inclut en outre une troisième portion (1623c) pliée à partir de la deuxième portion (1623b) et insérée dans la rainure de réception (1635).

11. Machine rotative selon l'une quelconque des revendications précédentes, dans laquelle l'entretoise (1430, 1530, 1630) inclut une saillie de couplage (1536).

12. Machine rotative selon la revendication 11, dans laquelle la plaque de support (1423, 1523, 1623) inclut un trou de couplage (1523c) dans lequel la saillie de couplage (1536) est montée.
